# EUROPÄISCHE PATENTSCHRIFT

(11) **EP 0 617 680 B1**
(45) Veröffentlichungstag und Bekanntmachung des Hinweises auf die Patenterteilung: **25.11.1998**
(21) Anmeldenummer: 93917515.4
(22) Anmeldetag: 19.08.1993
(51) Int. Cl.: B62M 9/08, F16H 55/54, F16H 3/42

(54) **KETTENGETRIEBE MIT VERÄNDERLICHEM ÜBERSETZUNGSVERHÄLTNIS UND ZAHNKETTE**
CHAIN GEAR WITH VARIABLE TRANSMISSION RATIO AND LADDER CHAIN
ENGRENAGE A CHAINE A RAPPORT DE TRANSMISSION VARIABLE ET A CHAINE DENTEE

(30) Priorität: 21.08.1992 CH 2608/92
(43) Veröffentlichungstag der Anmeldung: 05.10.1994
(73) Patentinhaber: BÄCHTIGER, Rolf, CH-8966 Oberwil-Lieli (CH)
(72) Erfinder: BÄCHTIGER, Rolf, CH-8966 Oberwil-Lieli (CH)
(74) Vertreter: Wächter, Roland
(86) Internationale Anmeldenummer: CH9300209
(87) Internationale Veröffentlichungsnummer: WO9404411

(56) Entgegenhaltungen:
- EP-A- 0 030 992
- EP-A- 0 185 799
- WO-A-93/07045
- DE-C- 32 784
- FR-A- 796 269
- US-A- 4 787 879
- US-A- 4 961 719

## Beschreibung

Die vorliegende Erfindung betrifft ein Kettengetriebe und eine Kette nach dem Oberbegriff des Patentanspruchs 1.

Zur weitgehend verschleissfreien und schlupflosen Kraftübertragung zwischen zwei einen relativ grossen Abstand zueinander aufweisenden Wellen werden oft Kettengetriebe verwendet. Dazu werden die Wellen mit Kettenrädern versehen, die über eine Kette miteinander verbunden werden. Durch die Wahl der Durchmesser der verwendeten Kettenräder wird das Übersetzungsverhältnis des Getriebes festgelegt. Kettengetriebe sind zudem robust und kostengünstig und werden daher in verschiedensten Antriebssystemen, z. B. in Motorrädern, Fahrrädern oder in verfahrenstechnischen Maschinen eingesetzt.

Dabei besteht meist der Bedarf, das Übersetzungsverhältnis verändern zu können. Bei bekannten Kettenantrieben sind daher auf zumindest einer Welle mehrere Kettenräder unterschiedlichen Durchmessers vorgesehen. Durch das Umlenken der Kette von einem ersten zu einem zweiten Kettenrad lässt sich das Übersetzungsverhältnis bzw. das Verhältnis der Durchmesser der über die Kette miteinander verbundenen Kettenräder daher stufenweise verstellen. Dabei ist bekannt, dass die (Antriebs-) Kette immer genau rechtwinklig zu beiden Wellen laufen soll und in sich nicht verdreht werden darf. Durch das in den bekannten Kettengetrieben übliche Umlenken der Kette zwischen mehreren Kettenrädern entstehen daher Kantenpressungen und ein starker Verschleiss in den Gelenken. Ferner erfordert das Umlenken, das nur möglich ist, wenn die auf die Kette ausgeübte Zugkraft stark reduziert wird, einen relativ grossen Kraftaufwand. Derartige Kettengetriebe mit veränderbarem Übersetzungsverhältnis sind ferner zur Verwendung in automatischen Getrieben schlecht geeignet.

Bei automatischen Kettengetrieben soll nämlich das Übersetzungsverhältnis unter ist innerhalb kurzer Zeit selbsttätig derart ändern, dass das Antriebsdrehmoment innerhalb vorgegebener Grenzen verbleibt. Ein Kettengetriebe mit veränderbarem Übersetzungsverhältnis ist aus der EP-OS 0 116 731 bekannt. In diesem bekannten Getriebe, in dem das Übersetzungsverhältnis durch die kontinuierliche Änderung des Durchmessers eines Kettenrades automatisch verstellt wird, sind zwei miteinander verbundene äussere Platten vorgesehen, die über eine Feder mit dem variablen Kettenrad verbunden sind. Das Kettenrad besteht aus mehreren Zahnrädern, die je über einen Steg mit einem Endpunkt eines Sternenrades verbunden sind. Jedes Zahnrad ist ferner beidseitig in Kanälen geführt, die in den beiden Platten vorgesehenen sind und greift phasenweise in eine Antriebskette ein. Durch die Änderung des über die Antriebskette auf das variable Kettenrad oder des über vorgesehene Pedalen auf die Platten einwirkenden Drehmomentes werden die beiden Platten relativ zum Kettenrad bzw. zum Sternrad verdreht, wodurch die Zahnräder radial innerhalb der Kanäle nach innen oder nach aussen verschoben werden. Dadurch wird entsprechend der Drehmomentänderung automatisch der Durchmesser des Kettenrades und proportional dazu das Übersetzungsverhältnis geändert. (Ein ähnliches Kettengetriebe, bei dem jedoch eine manuelle Änderung des Übersetzungsverhältnisses vorgesehen ist, ist ferner aus der EP-OS 0 130 984 bekannt.)

Nachteilig bei dem aus der EP-OS 0 116 731 bekannten Kettengetriebe bzw. Kettenrad ist, dass von den vorhandenen sechs jeweils nur maximal vier Zahnräder gleichzeitig in die Antriebskette eingreifen können. Da die Zahnräder ferner einen relativ kleinen Durchmesser aufweisen, greift pro Zahnrad nur etwa ein Zahn fest in die Antriebskette ein. Ferner ist es möglich, dass bei ungünstigem Durchmesser des Kettenrades einzelne Zahnräder wohin die Antriebskette eingreifen, jedoch keine Zugkraft ausüben. Dies ist insbesondere dann der Fall, wenn der Abstand der Eingriffspunkte der Zahnräder nicht einem Vielfachen der Länge der Kettenglieder entspricht. Insgesamt wird die Antriebskette daher jeweils von einem bis maximal vier Zähnen gezogen. Dadurch ist es leicht möglich, dass die Antriebskette gelegentlich vom Kettenrad springt. Insbesondere erhöht sich jedoch die Beanspruchung der in die Kette eingreifenden Zähne und der einzelnen Kettenglieder, da die Belastung nicht mehr gleichmässig über viele Zähne verteilt wird. Es ist daher anzunehmen, dass Verschleisserscheinungen bei diesem Kettengetriebe relativ früh auftreten, wodurch ein erhöhter Wartungsaufwand notwendig wird. Da die Antriebskette nur an wenigen Punkten des Kettenrades (in der Form eines Vielecks) aufliegt, ändert ferner das auf dieses Rad übertragene Drehmoment bzw. die von diesem Rad auf die Kette ausgeübte Zugkraft. Durch auftretende Schwingungen und Schläge ergibt sich dabei eine Verschlechterung des Wirkungsgrades des Kettengetriebes.

Aus der EP-A-0 030 992 ist ein Getriebeglied mit veränderlichem Durchmesser bekannt, das mit einem am Umfang angreifenden Übertragungselement zusammenwirkt. Um ein über einen grösseren Teil des Umfangs erfolgendes formschlüssiges Kämmen mit dem Übertragungselement sicherzustellen, ist eine am Umfang des Getriebegliedes abgestützte, flexible Zugkette vorgesehen, deren wirksame Länge mit Hilfe eines innerhalb des Umfanges des Getriebegliedes vorgesehenen Speichers In Abhängigkert von der Verstellung des wirksamen Durchmessers um ein ganzzahliges Vielfaches der Zahn- bzw. Lochteilung des Zugmittels veränderbar ist. Daraus resultiert eine stufenartige Veränderung des wirksamen Durchmessers des Getriebegliedes, die insbesondere bei der automatischen Umschaltung des Übersetzungsverhältnisses unter Last Probleme verursacht. Zur Verstellung im unbelasteten Zustand wird in der EP-A-0 030 992 die Verwendung von zwei Zugketten empfohlen. Dadurch lassen sich die zur Abstützung der Zugketten vorgesehene Stellkörper getrennt voneinander verschieben.

Der vorliegenden Erfindung liegt daher die Aufgabe zugrunde, ein Kettengetriebe zu schaffen, dessen Übersetzungsverhältnis unter Last stufenlos änderbar ist.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

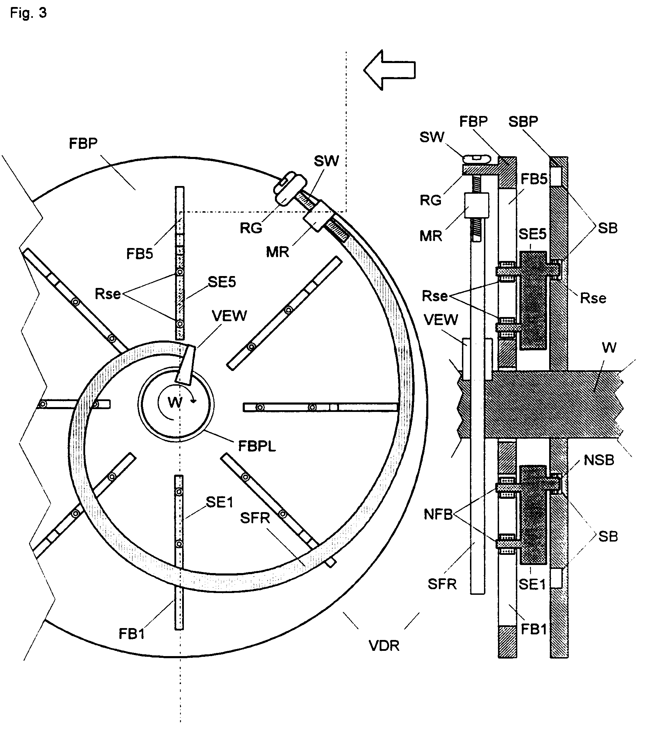

Als Zugmittel für das am Umfang des Getriebegliedes angreifende Übertragungselement wird erfindungsgemäss eine mit Kettenzähnen versehene Zahnkette verwendet. Gemäss der EP-A-0 030 992 ist jede Ausbildung des Zugmittels geeignet, sofern eine formschlüssige Verbindung zwischen dem Zugmittel (Zahnkette) und dem Übertragungselement zustande kommt. In der DE,C, 727 593, Fig. 3 ist eine derartige formschlüssige Verbindung zwischen einem Zugmittel (Laschenkette) und einem Übertragungselement (mit Zähnen versehene Triebkette) gezeigt. Da sich die Drehachsen der Verbindungsglieder der Laschenkette und der Triebkette jedoch nicht decken, werden die Rollen der Laschenkette durch die Zähne der Triebkette festgeklemmt, sobald das Kettenrad einen genügend kleinen Durchmesser annimmt. Bei genügend grossem Durchmesser des Kettenrades liegen die Zähne der Triebkette hingegen lose zwischen den Rollen der Laschenkette. Das in der DE,C, 727 593 gezeigte Kettengetriebe kann daher nicht einwandfrei funktionieren. Aus der bereits früher veröffentlichen FR-A-796 269 ist ein mit Kettengliedern versehener Zahnriemen bekannt, der zum Ziehen einer Laschenkette vorgesehen ist. Die Drehachsen der formschlüssig ineinandergreifenden Glieder der Laschenkette und des Zahnriemens sind deckungsgleich, so dass das gegenseitige Verklemmen der Zähne des Zahnriemens mit den Rollen der Laschenkette nicht auftritt. Bei dem aus der FR-A-796 269 bekannten Zahnriemen ist jedoch nur jedes zweite Glied mit einem Zahn versehen. Dadurch tritt wiederum der aus der EP-A-0 116 731 bekannte Nachteil zutage, dass die Kraftübertragung vom Zugmittel auf das Übertragungsmittel nicht zufriedenstellend erfolgt. Insbesondere bei kleinen Durchmessern des Kettenrades, wenn entlang dem Umfang des Kettenrades nur wenige Glieder des Zugmittels vorhanden sind und von den Zähnen des Zugmittels grosse Kräfte z.B. auf eine Laschenkette zu übertragen sind, ist es notwendig, ein Zugmittel zu verwenden, bei welchem jedes Glied mit einem Zahn versehen ist.

Durch die im Anspruch 9 angegebenen Massnahmen wird eine für das erfindungsgemässe Kettengetriebe geeignetes Zugmittel bzw. eine Zahnkette geschaffen, die von den aus der FR-A-796 269 oder der DE,C, 727 593 bekannten Nachteilen befreit ist. Diese erfindungsgemässe Zahnkette ist jedoch auch für nicht stufenlos geschaltete Kettengetriebe vorteilhaft anwendbar.

Das erfindungsgemässe Kettengetriebe weist ein Kettenrad mit veränderlichem Durchmesser auf, bei dem eine kontinuierliche durch eine Zahnkette gebildete periphere Verzahnung vorhanden ist. Die Antriebskette wird daher immer gleichmässig von vielen Zähnen dieser Zahnkette erfasst und gezogen. Da die Zugkraft auf viele einzelne Kettenglieder und Zähne verteilt ist und nicht nur von wenigen Elementen übertragen wird, ergibt sich nur eine geringe Abnutzung dieser Teile. Das Herausspringen der Kette wird ferner vermieden. Durch die besondere Gestaltung des variablen Kettenrades und der Zahnkette wird eine Modulation der auf das Kettenrad einwirkenden Kräfte vermieden. Die Kraft kann daher gleichmässig auf das angetriebene Rad übertragen werden, wodurch der Radfahrer weniger ermüdet. Da die Rollen der Kette auf gleiche Weise wie bei einem normalen Kettenzahnrad durch die Zähne der Verzahnungskette angetrieben werden, wird ferner ein hoher Wirkungsgrad erreicht. Das Kettengetriebe, das einfach und kostengünstig aufgebaut ist, erlaubt die stufenlose Veränderung des Übersetzungsverhältnisses. Die Einstellung des gewünschten Übersetzungsverhältnisses ist zudem bei beliebiger in der Kette vorhandener Zugkraft möglich. Die einzelnen Komponenten des Kettengetriebes wirken dabei derart aufeinander ein, dass nur ein minimaler Materialverschleiss auftritt. Insbesondere ergibt sich eine Erhöhung der Lebensdauer der Kettenräder und der (Antriebs-) Kette. Die Lebensdauer der Kette wird insbesondere dadurch erhöht, dass diese niemals Ruckweise belastet wird und immer rechtwinklig zu den getriebenen Wellen verläuft. Die die Lebensdauer der Kette begrenzende bleibende Längung von ungefähr 3%, die durch Recken und Abnutzung der Gelenke hervorgerufen wird, wird daher erst nach langer Betriebszeit des Kettengetriebes erreicht. Das erfindungsgemässe Kettengetriebe eignet sich besonders zum Einsatz als automatisches Getriebe für Motorräder und Fahrräder, bei denen im allgemeinen nur eine stark begrenzte, vom Kettengetriebe auf das Antriebsrad zu übertragende Antriebsleistung zur Verfügung steht und eine stetige optimale Anpassung des Übersetzungsverhältnisses an die dauernd wechselnden Bedingungen (Steigungen, Beschleunigungen) speziell wichtig ist. Besonders geeignet für diese Anwendungszwecke ist auch der mit dem erfindungsgemässen Kettengetriebe realisierte Getriebe-Automat, bei dem das Übersetzungsverhältnis in Abhängigkeit des bestehenden Lastdrehmomentes und dem zur Verfügung stehenden bzw. dem gewünschten Antriebsdrehmoment selbsttätig eingestellt wird. Dadurch erhöht sich der Komfort, der Wirkungsgrad und die Sicherheit im Umgang mit Geräten, die mit erfindungsgemässen Kettengetrieben ausgerüstet sind. Zur Anpassung des Schaltverhaltens an die Wünsche des Anwenders kann das Kettengetriebe auch als Halbautomat ausgeführt werden. Dabei kann der Anwender z.B. das gewünschte Antriebsdrehmoment nicht nur vor, sondern vorzugsweise auch während dem Betrieb einstellen und ändern. Es kann ferner vorgesehen sein, dass der Schaltvorgang immer nur vom Anwender ausgelöst werden kann. D.h., falls der Anwender das Antriebsdrehmoment bei steigender Last erhöht und das Übersetzungsverhältnis bis zu einem bestimmten Zeitpunkt beibehalten will, kann er den Schaltvorgang beliebig verzögern und erst bei einer ihm passenden Gelegenheit auslösen.

Das variable Kettenrad des erfindungsgemässen Kettengetriebes ist aufgrund der Verwendung einer Zahnkette ferner auch zum Antrieb von Zahnrädern anstatt von Antriebsketten sehr gut geeignet, was bei den oben beschriebenen Lösungen aus dem Stand der Technik nicht möglich ist.

Die Erfindung wird nachfolgend anhand einer Zeichnung beispielsweise näher erläutert. Dabei zeigt :
- Fig. 1: ein mit einer Zahnkette sowie mit einer Spiralbahn- und einer Führungsbahnplatte versehenes variables Kettenrad
- Fig. 2: ein mit zwei variablen Kettenrädern versehenes Fahrrad
- Fig. 3: ein mit einer Spiralfeder versehenes Kettenrad und Seitenansicht
- Fig. 4: ein variables Kettenrad mit Rückzugsvorrichtungen für zwei Zahnketten
- Fig. 5: eine mit mehreren Spiralbahnen und Segmenten versehene Spiralbahnplatte
- Fig. 6: eine bevorzugte Ausgestaltung der Zahnkette
- Fig. 7: eine bevorzugte Verbindung zwischen der Zahnkette und einem Segment
- Fig. 8: ein variables Kettenrad mit Dämpfungs- bzw. Steuerelementen

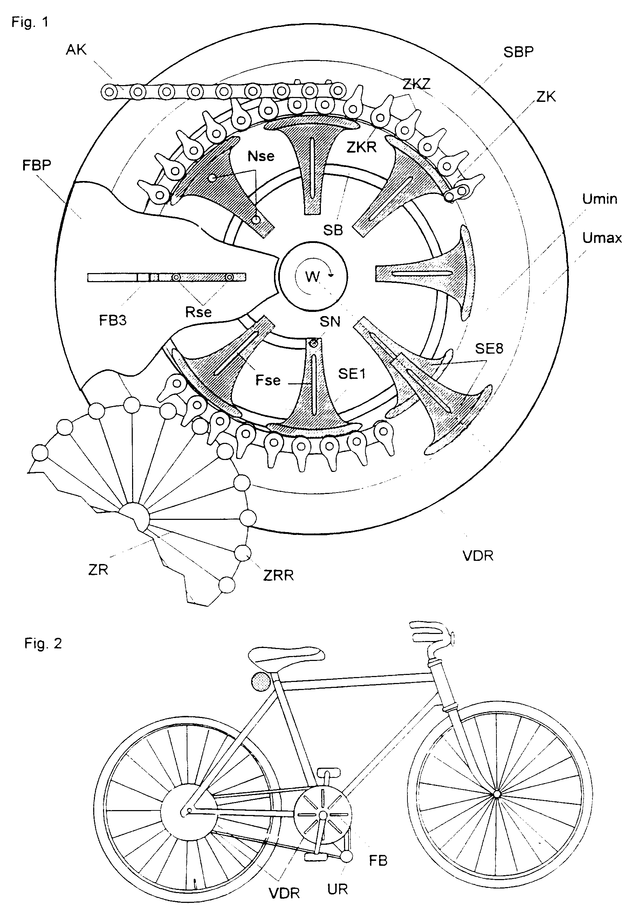

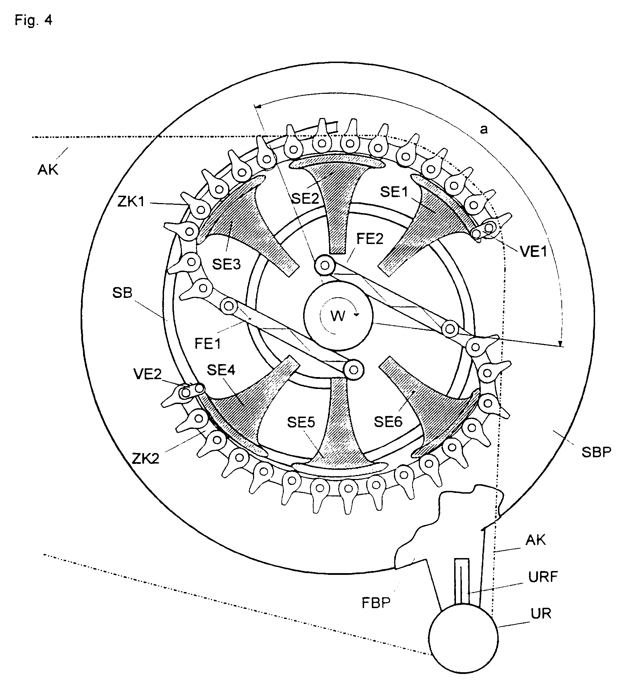

Fig. 1 (siehe auch Fig. 3) zeigt ein Kettenrad VDR, das im wesentlichen aus einer Spiralbahnplatte SBP und einer Führungsbahnplatte FBP besteht, die (bei der Verwendung des Kettengetriebes als Getriebeautomat) über ein elastisches Element, z.B. die in Fig. 3 gezeigte Spiralfeder SFR, miteinander verbunden sind. Der Spiralbahnplatte SBP, die mit einer Antriebswelle W fest verbunden ist, ist eine Spiralbahn SB zugefügt, deren Bahnradius proportional zu einer Drehung nach rechts abnimmt. Nebst derartigen archimedischen Spiralen ist die Verwendung weiterer Spiralformen möglich. Z.B. können auch Spiralbahnen SB vorgesehen sein, deren Steilheit kontinuierlich oder schrittweise ändert. Die Spiralbahn SB kann mit der Spiralbahnplatte SBP verbunden oder vorzugsweise in diese eingearbeitet sein. In der Führungsbahnplatte FBP sind acht Führungsbahnen FB vorgesehen, von denen die Führungsbahn FB3 gezeigt ist. Ferner sind acht radial ausgerichtete Segmente SE1, ..., SE8 vorgesehen, die Mittel (SN; Nse, Rse, Fse) aufweisen, mit denen sie auf der einen Seite in die Spiralbahn SB und auf der anderen Seite in die Führungsbahnen FB eingreifen können. Auf der Frontseite kann ein Segment SE z.B. einen oder mehrere Nocken Nse, eine oder mehrere Rollen Rse oder einen Flügel Fse aufweisen, mit denen in die Führungsbahnen FB eingegriffen wird. Vorzuziehen sind Mittel (Rse), die reibungsfrei innerhalb der Führungsbahnen FB verschiebbar sind. Auf der Rückseite der Segmente SE ist vorzugsweise nur ein Nocken SN (oder eine Rolle) vorgesehen, der in die Spiralbahn SB eingreift. Vorzuziehen sind wiederum Mittel, die reibungsfrei innerhalb der Spiralbahn SB verschiebbar sind. Die Segmente SE sind in den Führungsbahnen FB in Abhängigkeit der Stellung der Spiralbahn SB stirnseitig zwischen einem Umfang Umin und Umax verschiebbar. Die Stirnseiten der Segmente SE, die vorzugsweise annähernd bogenförmig ausgebildet sind, werden ferner von mindestens einer (teilweise gezeigten) Zahnkette ZK fast vollständig umschlossen, die von einem nicht gezeigten Mechanismus (s. Fig. 4) spielfrei gehalten wird. D.h., bei einer Änderung der Übersetzung bzw. des Durchmessers des von den Segmenten SE festgelegten Kreises, dessen Umfang sich zwischen Umax und Umin bewegt, wird die Länge der Zahnkette ZK entsprechend angepasst. Falls die Übersetzung nicht geändert wird, so werden alle Glieder der Zahnkette ZK mit derselben Winkelgeschwindigkeit wie die Segmente SE um das Zentrum des Kettenrades VDR bewegt. Die Kettenglieder KG oder die Segmente SE weisen bevorzugt Rollen auf, mittels denen die Zahnkette ZK auf den Segmenten SE beim Wechsel der Übersetzung abrollen und leicht nachgezogen werden kann. Durch die Zähne ZKZ der Zahnkette ZK wird der eigentliche Zahnkranz des Kettenrades VDR gebildet, der zum Ziehen einer Antriebskette AK oder eines Zahn- oder mit Rollen ZRR versehenen -Rades ZR geeignet ist. Der durch die Zahnkette ZK gebildete Zahnkranz ist dabei unabhängig von den Mitteln vorteihaft einsetzbar, durch die die Segmente SE radial bewegt werden. Beispielsweise ist es möglich die Segmente SE durch Gestänge, Kipphebel oder Gewindestangen zu bewegen, die beispielsweise von Zahnrädern angetrieben werden.

Das Kettenrad VDR, das, wie in Fig. 2 gezeigt, zur Anwendung in Fahrrädern gut geeignet ist, weist folgenden Antriebsweg auf :

Von der fest mit der Spiralbahnplatte SBP verbundenen Antriebswelle W wird über die Spiralfeder SFR (s. Fig. 3) ein Antriebsdrehmoment auf die Führungsbahnplatte FBP übertragen. Von der Führungsbahnplatte FBP werden entsprechende Kräfte auf die in die Führungsbahnen FB eingreifenden Rollen Rse (bzw. Nocken Nse, etc.) bzw. auf die Segmente SE übertragen. Über die sich mit derselben Winkelgeschwindigkeit wie die Segmente SE bewegende Zahnkette ZK wird dabei eine Zugkraft auf die Antriebskette AK (oder ein Zahnrad) ausgeübt.

Die Segmente SE1, ..., SE8 sind bei Inbetriebnahme des Kettengetriebes radial maximal nach aussen verschoben und stossen stirnseitig an den Kreisbogen Umax an. Die auf die Zahnkette ZK ausgeübte Zugkraft ist in diesem Zustand daher am geringesten. Falls diese Kraft nicht genügt, das Fahrrad (zügig) in Bewegung zu setzen, wird die Spiralbahnplatte SBP und die Welle W relativ zur Führungsbahnplatte FBP gedreht, wodurch die Segmente SE, die dem Lauf der Spiralbahn SB folgen, festgelegt durch die Führungsbahnen FB, radial nach innen gezogen werden. Die Verschiebung der Segmente SE ist bei archimedischen Spiralbahnen SB jeweils proportional zur relativen Verdrehung der Spiralbahnplatte SBP und der Führungsbahnplatte FBP. D.h., je weiter die Spiralbahnplatte SBP der Führungshahnplatte FBP voreilt, desto kleiner wird der Radius des durch die Segmente SE gebildeten Kreises. Proportional zur Abnahme des Kreisradius steigt dabei die auf die Antriebskette AK ausgeübte Zugkraft, wodurch das Fahrrad stärker beschleunigt wird. Sobald die von der Spiralfeder SFR und der Antriebskette AK auf die Führungsbahnplatte FBP einwirkenden Kräfte im Gleichgewicht sind, befinden sich die Spiralbahnplatte SBP und die Führungsbahnplatte FBP im Gleichlauf. Falls z.B. nach Abschluss der Beschleunigungsphase die Gegenkraft der Antriebskette AK abnimmt, wird die Führungsbahnplatte FBP durch die Spiralfeder SFR nachgezogen, so dass sich die relative Verdrehung der Spiralbahnplatte SBP und der Führungsbahnplatte FBP reduziert. Dadurch werden die Segmente SE wieder radial nach aussen verschoben, wodurch sich das Übersetzungsverhältnis wieder erhöht. Durch das Kettenrad VDR wird das Lastmoment daher jeweils dem gewählten über die Spiralfeder SFR auf die Führungsbahnplatte FBP übertragenen Antriebsdrehmoment angepasst. Eine grosse Änderung des Lastmomentes kann daher mit einer relativ kleinen Änderung des Antriebsmomentes ausgeglichen werden.

Die Spiralfeder SFR, des in Fig. 3 in Front- und Seitenschnitt-Darstellung dargestellten Kettenrades VDR ist einerseits über ein Verbindungselement VEW mit der Welle W sowie der Spiralbahnplatte SBP und andererseits über eine Schraube SW mit der Führungsbahnplatte FBP verbunden. Durch die Schraube SW wird dabei der Abstand eines mit der Spiralfeder SFR verbundenen Endstücks MR von einem mit der Führungsbahnplatte FBP verbundenen Element RG eingestellt. Dadurch lässt sich die Spiralfeder SFR bedarfsweise vorspannen. D.h., die Spiralbahnplatte SBP und die Führungsbahnplatte FBP werden mit einer Vorspannkraft relativ zueinander fixiert. Erst nach Überschreiten dieser Vorspannkraft durch Anlegen eines entsprechend hohen Antriebsdrehmomentes wird diese Kraft überschritten und die Spiralbahnplatte SBP relativ zur Führungshahnplatte FBP gedreht. Durch die Wahl von Federn mit einer tieferen Federkonstante kann dabei die Kraft reduziert werden, die benötigt wird, um die Spiralbahnplatte SBP relativ zur Führungshahnplatte FBP um einen bestimmten Winkel zu verdrehen. D.h., das Antriebsdrehmoment muss nur geringfügig erhöht werden, um eine starke Erhöhung des Lastmoments auszugleichen. Ferner kann durch die Vorspannung natürlich auch festgelegt werden, in welchem Bereich das zu erbringende Antriebsdrehmoment liegen soll. In Fig. 3 (Seitenschnitt) ist ferner der Eingriff der Segmente SE1 und SE5 in die Führungsbahnen FB1 und FB5 der Führungsbahnplatte FBP sowie in die Spiralbahn SB der Spiralbahnplatte SBP. Die Segmente SE1, SE5 weisen zu diesem Zweck mit Rollen Rse versehene Nocken NFB bzw. NSB auf.

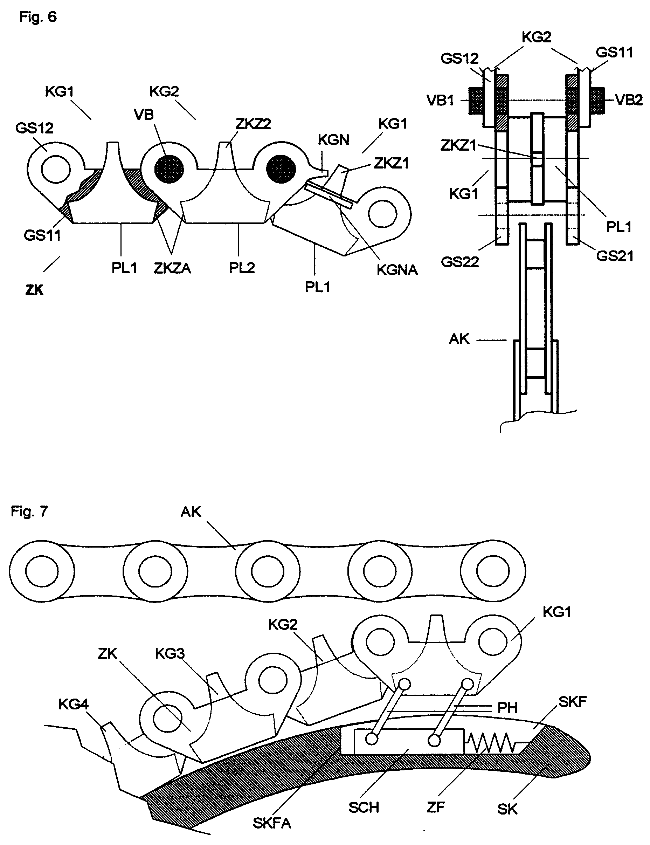

Falls der Umfang des durch die Segmente SE bestimmten Kreises, entlang dem die Zahnkette ZK verläuft, ändert und die Zahnkette ZK spielfrei gehalten werden soll, muss der der Umfangsänderung entsprechende Teil der Zahnkette ZK auf- oder abgewickelt werden. Dazu ist die in Fig. 4 gezeigte Lösung geeignet, bei der zwei Zahnketten ZK1 und ZK2 mittels einem Verbindungselement VE1 bzw. VE2 lose oder fest mit dem Segment SE1 bzw. SE4 verbunden und von einem Federelement FE1 bzw. FE2 über das Segment SE3 bzw. SE6 nach innen zurückgezogen und straff gespannt wird. Durch das Segment SE1 bzw. SE4 wird die Zahnkette ZK1 bzw. ZK2 daher im Uhrzeigersinn gezogen. Bei der bevorzugten Verwendung von zwei oder mehrere Zahnketten ZK wird erreicht, dass eine der Zahnketten ZK1 ; ZK2 bei jeder Umdrehung der Führungsbahnplatte FBP einmal aus dem Eingriff mit der Antriebskette AK gelangt. Dadurch kann diese nicht mehr im Eingriff mit der Antriebskette AK befindliche Zahnkette ZK1 oder ZK2 relativ zur Antriebskette AK verschoben werden, wodurch ein problemloses neuerliches Ineinanderverzahnen der Antriebs und der Zahnkette AK bzw. ZK ermöglicht wird (s. Fig. 7). Dazu sollte die Antriebskette AK nur etwa in 1/5 bis 2/5 des von den Zahnkette (ZK) bestimmten Kreisumfangs eingreifen.

Bei der Änderung des Durchmessers des Kettenrades VDR entstehende Überlängen der Antriebskette AK werden durch eine mit der Führungsbahnplatte FBP verbundene Umlenkrolle UR aufgefangen, die z.B. in einer Führung URF mit konstanter Kraft nach unten gedrückt wird. Durch die Umlenkrolle UR ist ferner vorgesehen, dass die Antriebskette AK nur in einem vorgesehenen Winkel a in die Zahnkette ZK eingreift. Der Winkel a wird dabei relativ Mein, z.B. 90°, gehalten, da Änderungen der Übersetzung oder zumindest das Auf- und Abwickeln der Zahnkette ZK nicht zulässig sind, falls das frontseitige und das rückseitige Ende der Zahnkette ZK gleichzeitig Im Eingriff mit der Antriebskette AK sind. In Fig. 4 ist ersichtlich, dass die zweite Zahnkette ZK2 nach einer geringfügigen weiteren Drehung des Kettenrades VDR aus dem Eingriff mit der Antriebskette AK gerät und durch das Federelement FE2 neu positioniert werden kann.

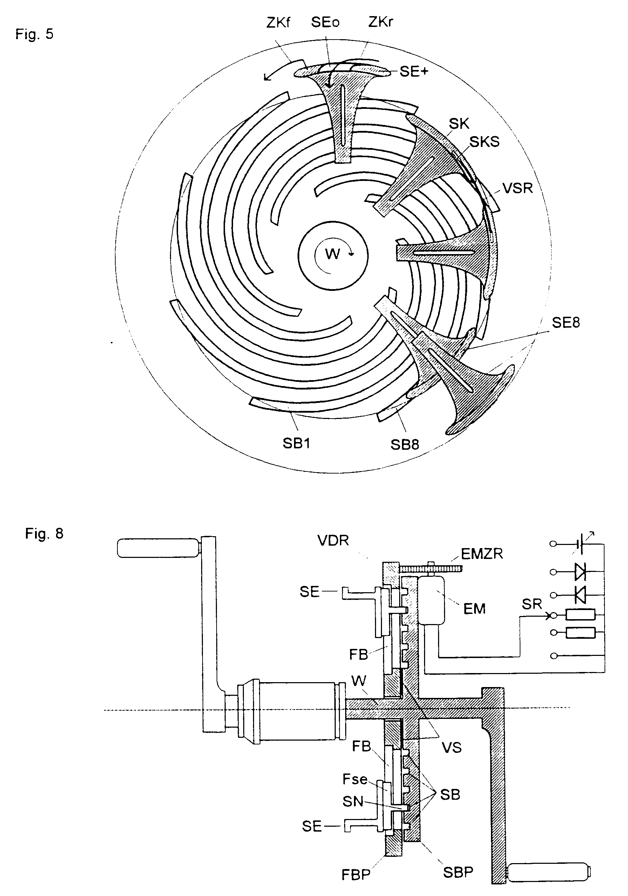

In Fig. 5 ist eine Spiralbahnplatte SBP gezeigt, die acht Spiralbahnen SB1, ..., SB8 aufweist, die im Vergleich zu der in Fig. 1 gezeigten Spiralbahn SB eine viel grössere Steilheit aufweisen. Dies kann z. B. für bestimmte Spiralfedern SFR von Vorteil sein. Natürlich können pro Spiralbahn SB auch zwei oder mehrere Segmente SE vorgesehen sein. Vorzugsweise werden identische Segmente SE1, ..., SE8 verwendet, was zu einer Reduktion der Produktionskosten führt. Die Segmentköpfe SK können ferner mit Schlitzen SKS versehen sein, die annähernd parallel zur Zahnkette ZK verlaufen und in denen ein in zwei Segmente SE eingreifender Schieber VSR vorgesehen ist, der zum Abstützen der Zahnkette ZK zwischen den Segmenten SE vorgesehen ist. Bei der radialen Verschiebung der Segmente SE nach innen wird dieser Schieber VSR in die entsprechenden Schlitze SKS hineingeschoben. In Fig. 5 ist ferner ein Segment SE+ gezeigt, das eine Öffnung SEo im Segmentkopf SK aufweist, durch die das rückseitige Ende ZKr der Zahnkette ZK in das Innere des Kettenrades VDR gezogen werden kann. Das frontseitige Ende ZKf der Zahnkette ZK ist in der gezeigten Ausführung mit demselben Segment SE+ fest verbunden. Durch diese Lösung ergibt sich eine erhebliche Platzersparnis im Vergleich zu der in Fig. 4 gezeigten Lösung.

In Fig. 6 ist ein Teil einer Zahnkette ZK dargestellt, die aus miteinander über Bolzen VB verbundenen Kettengliedern KG1 und KG2 besteht. Jedes Kettenglied KG1, KG2 besteht vorzugsweise aus zwei Laschen GS11, GS12 bzw. GS21, GS22, die in gleichem Abstand einen parallel zu den Laschen GS11, GS12 bzw. GS21, GS22 vertaufenden Kettenzahn ZKZ1 bzw. ZKZ2 einschliessen und mit diesem einseitig über eine Platte PL1 bzw. PL2 verbunden sind. Die miteinander verbundenen Laschen GS11, GS12 bzw. GS21, GS22 der Zahnkette ZK entsprechen bezüglich der Abstände der Verbindungspunkte zumindest annähernd den Laschen der Antriebskette AK (s. Fig. 7). Die Antriebskette AK wird daher von der Zahnkette ZK derart aufgenommen, dass deren Zähne ZKZ1; ZKZ2 sich passend zwischen die Rollen der Antriebskette AK einfügen. Die Rollen der Kette AK bzw. die Verbindungspunkte der Kettenglieder liegen dabei annähernd konzentrisch zu den Bolzen VB. Die ineinandergreifenden Teile der beiden Ketten AK und ZK weisen daher immer denselben Krümmungsradius auf.

Der Bolzen VB kann ferner über die Laschen GS11, GS12 bzw. GS21, GS22 hinausragen, so dass er in der Führungsbahn FB und/oder der Spiralbahn SB geführt werden kann. Das Kettenrad VDR wird dabei vorzugsweise durch zwei Spiralbahnplatten SBP gebildet, die mit der Welle W verbunden sind und die die eingeschlossene Zahnkette ZK bzw. die Kettenglieder KG1, KG2 beidseitig in mindestens je einer Spiralbahn SB führen. Die Zahnkette ZK wird in diesem Fall vorzugsweise ohne zusätzliche Führungsbahnplatte FBP direkt von einem mit der Welle W verbundenen elastischen Element, z.B. der Spiralfeder SFR gezogen. Anstatt den Segmenten SE, wie in Fig. 3 gezeigt, würden daher die einzelnen Kettenglieder KG1, KG2 in der Spiralbahn SB geführt und radial verschoben. Die Zahnkette ZK wird dabei vorzugsweise ebenfalls durch ein elastisches Element (FE) gespannt.

Ferner kann um die herausragenden Teile der Bolzen auch ein Rad vorgesehen sein, das auf den Segmenten SE abrollt. Weiterhin können Kettenglieder KG, die insbesondere für kleinere Antriebsmomente vorgesehen sind, auch nur einseitig mit einer Lasche GS versehen sein. Weiterhin können die Kettenglieder KG2 mit Nocken KGN versehen sein, die bei einer maximal zulässigen gegenseitigen Verdrehung der Kettenglieder KG1 und KG2 auf einen an den Kettengliedern KG1 vorgesehenen Anschlag KGNA auftreffen. Dadurch wird ein Durchhängen oder eine Durchbiegung der Zahnkette ZK verhindert.

In Fig. 7 sind die ersten vier Glieder KG1, ...KG4 der Zahnkette ZK unmittelbar vor dem Moment gezeigt, in dem sie in die Antriebskette AK eingreifen. Das erste Kettenglied KG1 ist dabei über zwei parallel geführte Hebel PH mit einem Schieber SCH verbunden, der in einer Ausnehmung SKF des Segmentkopfes SK geführt und über ein elastisches Element, z.B. eine Feder ZF mit dem Segmentkopf SK verbunden ist. Durch die Feder ZF wird der Schieber nach vorn gezogen, wodurch das erste Kettenglied KG1 vom Segmentkopf SK abgehoben wird. Falls die Zahnkette ZK rückseitig nicht mehr im Eingriff mit der Antriebskette ist (z.B. bei der Verwendung von zwei Zahnketten ZK) wird das abgehobene Kettenglied KG1 durch die Antriebskette AK erfasst und in die richtige Position geführt. Auch nach dem Wechsel des Übersetzungsverhältnisses wird dadurch ein sanftes Ineinandergreifen der beiden Ketten AK und ZK ermöglicht. Durch die Antriebskette AK wird das erfasste Kettenglied KG1 nach unten gedrückt, wonach der Schieber SCH bis zu einem in der Ausnehmung SKF vorgesehenen Anschlag SKFA zurückgestossen und von diesem erfasst wird.

In Fig. 8 ist ein Kettenrad VDR gezeigt, bei dem die Führungsbahnplatte FBP und die von der Welle W angetriebene Spiralbahnplatte SBP eng beieinander liegen, die verwendeten Segmente SE sind durch Flügel Fse in den Führungsbahnen FB der Führungsbahnplatte FBP geführt und greifen ferner mit einem Nocken SN in die in der Spiralbahnplatte SBP vorgesehene Spiralbahn SB ein. Um ruckartige gegenseitige Verschiebungen der Platten FBP und SBP zu vermeiden, sind darin Dämpfungselemente EM; VS dargestellt die vorzugsweise alternativ verwendet werden. Z.B. kann eine viskose Schicht vorgesehen sein, die die Platten SBP und FBP mit einander verbindet und die eine schnelle Relativbewegung der Platten SBP und FBP verhindert. Ferner kann ein Elektromotor EM vorgesehen sein, der mit einer der Platten (z.B. SBP) fest und mit der anderen Platte (z.B. FBP) über ein Antriebsrad (z.B. Zahnrad EMZR) verbunden ist. Durch eine Relativbewegung beider Platten SBP und FBP wird der Elektromotor EM daher über das Zahnrad EMZR in Bewegung gesetzt. Durch die entsprechende Beschaltung des Elektromotors EM kann die Relativbewegung der Platten nahezu beliebig gedämpft werden. Durch einen Kurzschluss des Elektromotors EM über eine Diode kann z.B. vorgesehen sein, dass eine relative Vorwärtsbewegung der Spiralbahnplatte SBP gedämpft und eine relative Rückwärtsbewegung der Spiralbahnplatte SBP ungedämpft verläuft. Verschiedene Beschaltungen (Zuschaltung von Spannungsquellen mit entsprechender, vorzugsweise variabler Grösse und Polarität, Kurzschlusswicklungen, Widerständen und/oder Dioden) sind durch den Fahrer dabei vorzugsweise manuell z.B. über einen Schalter SR einstellbar. Durch das Anlegen einer Spannung an die Wicklungen des Elektromotors kann eine Relativbewegung der Platten FBP und SBP dabei gezielt herbeigeführt oder zumindest unterstützt werden. Der Elektromotor EM wird in diesem Fall als Steuerelement eingesetzt. Ferner kann vorgesehen sein, dass über das gezeigte Zahnrad EMZR eine Betätigung eines hydraulischen Dämpfers bewirkt wird.

## Patentansprüche

1. Kettengetriebe mit einem von einer Antriebswelle (W) angetriebenen Kettenrad (VDR), das einen variablen Umfang aufweist, der durch wenigstens zwei radial verschiebbare Segmente (SE) bestimmt wird, die von wenigstens zwei zum Ziehen einer Antriebskette (AK) vorgesehenen Zahnketten (ZK1, ZK2) umschlossen sind, die gespannt gehalten werden, dass **dadurch gekennzeichnet**, dass die Antriebskette (AK) nur soweit in den Umfang des Kettenrades (VDR) eingreift, dass sich jede der Zahnketten (ZK1, ZK2) während jeder Umdrehung des Kettenrades (VDR) zeitweilig vollständig von der Antriebskette (AK) löst, dass das erste Kettenglied (KG1 bzw. KG2) jeder Zahnkette (ZK1, ZK2) über ein erstes elastisches Element (ZF) mit einem zugehörigen Segment (SE) verbunden und entlang dem Umfang des Kettenrades (VDR) zumindest soweit verschiebbar ist, bis die jeweils von der Antriebskette (AK) gelöste Zahnkette (ZK1 oder ZK2) wieder in die Antriebskette (AK) eingreifen kann und dass jede der Zahnketten (ZK1; ZK2) durch ein zweites elastisches Element (FE1; FE2), welches das Ende der gehaltenen Zahnkette (ZK1; ZK2) in das Innere des Kettenrades hineinzieht, gespannt gehalten wird.

2. Kettengetriebe nach Anspruch 1, **dadurch gekennzeichnet**, dass der gewünschte Eingriff der Antriebskette (AK) in den Umfang des Kettenrades (VDR) eingestellt wird, indem die Antriebskette (AK) über eine entsprechend positionierte Umlenkrolle (UR) zu einem weiteren Kettenrad (VDR) oder einem festen Zahnrad geführt wird.

3. Kettengetriebe nach Anspruch 1 oder 2, **dadurch gekennzeichnet**, dass die ersten und/oder die zweiten elastischen Elemente (ZF; FE1, FE2) Federelemente sind.

4. Kettengetriebe nach Anspruch 1, 2 oder 3, **dadurch gekennzeichnet**, dass die ersten elastischen Elemente (ZF) bis zu einem im Segment (SE) vorgesehenen Anschlag (SKFA) dehnbar sind, nach dessen Erreichen die Zahnkette (ZK1; ZK2) synchron zum Kettenrad (VDR) dreht.

5. Kettengetriebe nach Anspruch 4, **dadurch gekennzeichnet**, dass das erste Kettenglied (KG1 bzw. KG2) jeder Zahnkette (ZK1; ZK2) über wenigstens zwei Hebel (PH) mit einem Schieber (SCH) verbunden ist, der mit einem ersten elastischen Element (ZF) gekoppelt und, begrenzt durch den Anschlag (SKFA), verschiebbar im Segment (SE) gelagert ist.

6. Kettengetriebe nach einem der Ansprüche 1 - 5, **dadurch gekennzeichnet**, dass die Welle (W) mit einer zumindest eine Spiralbahn (SB) aufweisenden Spiralbahnplatte (SBP) verbunden ist, die relativ zu einer zumindest eine Führungsbahn (FB) aufweisenden Führungsbahnplatte (FBP) drehbar ist und dass die Segmente (SE) in der Spiralbahn (SB) und der Führungsbahn (FB) verschiebbar gelagert sind.

7. Kettengetriebe nach Anspruch 6, **dadurch gekennzeichnet**, dass Spiralbahnplatte (SBP) und die Führungsbahnplatte (FBP) über ein drittes elastisches Element (SFR) miteinander verbunden sind.

8. Kettengetriebe nach einem der Ansprüche Anspruch 1 oder 7, **dadurch gekennzeichnet**, dass das das von der Welle (W) angetriebene bzw. das die Welle (W) antreibende Kettenrad (VDR) derart mit Dämpfungselementen versehen ist, dass starke Änderungen der auf das Kettenrad (VDR) einwirkenden Drehmomente nicht zu sprunghaften Änderungen des Durchmessers des Kettenrades (VDR) führen.

9. Kettengetriebe nach einem der Ansprüche Anspruch 1 oder 7, **dadurch gekennzeichnet**, dass die Zahnketten (ZK1, ZK2) erste und zweite alternierend angeordnete und drehbar miteinander verbundene Kettenglieder (KG1 bzw. KG2) aufweist, deren Laschen (GS11; GS12 bzw. GS21; GS22) verbunden mit einer Basisplatte (PL1 bzw. PL2) ein U-Profil bilden, wobei die mit einem Kettenzahn (ZKZ1 bzw. ZKZ2) versehene Basisplatte (PL1 bzw. PL2) und die auf jeder Seite durch Bolzen (VB1; VB2) miteinander verbundenen Laschen (GS11; GS12 bzw. GS21; GS22) derart bemessen sind, dass jedes Kettenglied (KG1 bzw. KG2) ein Glied der Rollenkette derart aufnehmen kann, dass dessen Rollen beim Aufliegen auf den Flanken des Kettenzahnes (ZKZ1 bzw. ZKZ2) zumindest annähernd konzentrisch zu den Bolzen (VB1, VB2) angeordnet sind.

10. Kettengetriebe nach Anspruch 9, **dadurch gekennzeichnet**, dass die Laschen (GS11, GS12 bzw. GS21, GS22) derart ausgestaltet sind, dass deren Unterseite mit der daran anschliessenden Basisplatte (PL1 bzw. PL2) kürzer ist als der Abstand zwischen den für die Durchführung der Bolzen (VB1, VB2) vorgesehenen Öffnungen.

## Claims

1. Chain drive having a chain wheel (VDR) driven by a drive shaft (W), which chain wheel has a variable circumference, which is determined by at least two radially displaceable segments (SE), which are enclosed by at least two toothed chains (ZK1, ZK2) provided in order to pull a driving chain (AK), which toothed chains are held under tension, characterized in that the driving chain (AK) only engages so far into the circumference of the chain wheel (VDR) that each of the toothed chains (ZK1, ZK2) is temporarily completely released from the driving chain (AK) during each revolution of the chain wheel (VDR), in that the first chain link (KG1 or KG2) of each toothed chain (ZK1, ZK2) is connected by way of a first elastic element (ZF) to an associated segment (SE) and is displaceable along the circumference of the chain wheel (VDR) at least until the toothed chain (ZK1 or ZK2), in each case released from the driving chain (AK), can again engage into the driving chain (AK), and in that each of the toothed chains (ZK1; ZK2) is held under tension by a second elastic element (FE1; FE2) which pulls the end of the supported toothed chain (ZK1; ZK2) into the inside of the chain wheel.

2. Chain drive according to claim 1, characterized in that the desired engagement of the driving chain (AK) into the circumference of the chain wheel (VDR) is adjusted in that the driving chain (AK) is guided by way of an appropriately positioned deflection roller (UR) to another chain wheel (VDR) or a fixed gearwheel.

3. Chain drive according to claim 1 or 2, characterized in that the first and/or the second elastic elements (ZF; FE1, FE2) are spring elements.

4. Chain drive according to claim 1, 2 or 3, characterized in that the first elastic elements (ZF) are extendable up to a stop (SKFA) provided in the segment (SE), and after the stop is reached the toothed chain (ZK1; ZK2) rotates synchronously with the chain wheel (VDR).

5. Chain drive according to claim 4, characterized in that the first chain link (KG1 or KG2) of each toothed chain (ZK1; ZK2) is connected by way of at least two levers (PH) to a slide (SCH) which is coupled to a first elastic element (ZF) and, limited by the stop (SKFA), is displaceably mounted in the segment (SE).

6. Chain drive according to one of claims 1 to 5, characterized in that the shaft (W) is connected to a spiral-way plate (SBP) having at least one spiral-way (SB), the spiral-way plate being rotatable relative to a guideway plate (FBP) having at least one guideway (FB), and in that the segments (SE) in the spiral-way (SB) and the guideway (FB) are displaceably mounted.

7. Chain drive according to claim 6, characterized in that the spiral-way plate (SBP) and the guideway plate (FBP) are connected to each other by way of a third elastic element (SFR).

8. Chain drive according to one of claims 1 or 7, characterized in that the chain wheel (VDR) which is driven by the shaft (W) or which drives the shaft (W) is provided with damping elements so that large changes of the torques acting on the chain wheel (VDR) do not lead to sudden changes of the diameter of the chain wheel (VDR).

9. Chain drive according to one of claims 1 or 7, characterized in that the toothed chains (ZK1, ZK2) have first and second chain links (KG1 and KG2) which are arranged alternately and are rotatably connected to each other, the clips (GS11; GS12 and GS21; GS22) of which, connected to a base plate (PL1 and PL2), form a U-section, with the base plate (PL1 and PL2) which is provided with a sprocket (ZKZ1 and ZKZ2), and the clips (GS11; GS12 and GS21; GS22) which are connected to each other on each side by bolts (VB1; VB2) being dimensioned in such a way that each chain link (KG1 and KG2) can take up a link of the roller chain in such a way that its rollers, when resting on the edges of the sprocket (ZKZ1 and ZKZ2) are arranged at least approximately concentrically with respect to the bolts (VB1, VB2).

10. Chain drive according to claim 9, characterized in that the clips (GS11, GS12 and GS21, GS22) are constructed in such a way that their underside with the base plate (PL1 and PL2) connected thereto is shorter than the distance between the openings provided for leading the bolts (VB1, VB2) through.

## Revendications

1. Transmission par chaîne, comprenant une roue (VDR) à chaîne, entraînée par un arbre (W) d'entraînement et dotée d'une circonférence variable qui est déterminée par au moins deux segments (SE) radialement coulissants qui sont entourés par au moins deux chaînes (ZK1, ZK2) dentées, prévues pour tirer une chaîne (AK) d'entraînement et maintenues tendues, **caractérisée** en ce que la chaîne (AK) d'entraînement s'engage dans la circonférence de la roue (VDR) à chaîne seulement suffisamment pour que chacune des chaînes (ZK1, ZK2) dentées, au cours de chaque révolution de la roue (VDR) à chaîne, se dégage temporairement totalement de la chaîne (AK) d'entraînement, en ce que le premier maillon (KG1 ou KG2) de chaque chaîne (ZK1 ZK2) dentée est relié par l'intermédiaire d'un premier élément (ZF) élastique à un segment (SE) associé et peut être coulissé, le long de la circonférence de la roue (VDR) à chaîne, au moins suffisamment pour que la chaîne (ZK1, ZK2) dentée respectivement dégagée de la chaîne (AK) d'entraînement puisse s'engager à nouveau dans la chaîne (AK) d'entraînement, et en ce que chacune des chaînes (ZK1, ZK2) dentées est maintenue tendue par un second élément (FE1, FE2) élastique, qui tire à l'intérieur de la roue à chaîne l'extrémité de la chaîne (ZK1, ZK2) dentée maintenue.

2. Transmission par chaîne suivant la revendication 1, **caractérisée** en ce que l'engagement souhaité de la chaîne (AK) d'entraînement dans la circonférence de la roue (VDR) à chaîne est réglé par le fait que la chaîne (AK) d'entraînement est guidée vers une autre roue (VDR) à chaîne, ou vers une roue dentée fixe, par l'intermédiaire d'un galet (UR) de renvoi positionné en conséquence.

3. Transmission par chaîne suivant la revendication 1 ou 2, **caractérisée** en ce que les premiers et/ou les seconds éléments (ZF ; FE1, FE2) élastiques sont des éléments de ressort.

4. Transmission par chaîne suivant la revendication 1, 2 ou 3, **caractérisée** en ce que les premiers éléments (ZF) élastiques sont extensibles jusqu'à une butée (SKFA) prévue dans le segment (SE), la chaîne (ZK1, ZK2) dentée tournant en synchronisme avec la roue (VDR) à chaîne une fois que cette butée est atteinte.

5. Transmission par chaîne suivant la revendication 4, **caractérisée** en ce que le premier maillon (KG1 ou KG2) de chaque chaîne (ZK1, ZK2) dentée est relié par l'intermédiaire d'au moins deux leviers (PH) à un coulisseau (SCH), qui est coupé à un premier élément (ZF) élastique et est monté dans le segment (SE) avec possibilité de coulissement, limité par la butée (SKFA).

6. Transmission par chaîne suivant l'une des revendications 1 à 5, **caractérisée** en ce que l'arbre (W) est relié à une plaque (SBP) de voie spirale, pourvue d'au moins une voie (SB) spirale et rotative par rapport à une plaque (FBP) de voie de guidage pourvue d'au moins une voie (FB) de guidage, et en ce que les segments (SE) sont montés à coulissement dans la voie (SB) spirale et la voie (FB) de guidage.

7. Transmission par chaîne suivant la revendication 6, **caracterisée** en ce que la plaque (SBP) de voie spirale et la plaque (FBP) de voie de guidage sont mutuellement reliées par l'intermédiaire d'un troisième élément (SFR) élastique.

8. Transmission par chaîne suivant la revendication 1 ou 7, **caractérisée** en ce que la roue (VDR) à chaîne, entraînée par l'arbre (W) ou, selon le cas, entraînant l'arbre (W), est dotée d'éléments d'amortissement de telle sorte que des fortes modifications des couples de rotation agissant sur la roue (VDR) à chaîne n'engendrent pas de brusques modifications du diamètre de la roue (VDR) à chaîne.

9. Transmission par chaîne suivant la revendication 1 ou 7, **caractérisée** en ce que la chaîne (ZK1, ZK2) dentée comporte des premiers et seconds maillons (KG1, KG2) disposés en alternance et reliés entre eux à rotation, maillons dont les attaches (GS11, GS12 ou GS21, GS22) forment un profil en U en étant assemblées à une plaque (PL1 ou PL2) de base, la plaque (PL1 ou PL2) de base, pourvue d'une dent (ZKZ1 ou ZKZ2) de chaîne, et les attaches (GS11, GS12 ou GS21, GS22), mutuellement reliées de chaque côté par des tourillons (VB1, VB2), étant dimensionnées de telle façon que chaque maillon (KG1, KG2) peut recevoir un maillon de la chaîne à rouleaux de telle sorte que les rouleaux de cette dernière sont, lorsqu'ils reposent sur les flancs de la dent (ZKZ1 ou ZKZ2) de chaîne, disposés au moins approximativement concentriquement aux tourillons (VB1, VB2).

10. Transmission par chaîne suivant la revendication 9, **caractérisée** en ce que les attaches (GS11, GS12 ou GS21, GS22) sont configurées de telle sorte que leur côté inférieur avec la plaque (PL1 ou PL2) qui s'y raccorde, est plus court que la distance entre les ouvertures prévues pour le passage des tourillons (VB1, VB2).
